## Europäisches Patentamt

## European Patent Office

## Office européen des brevets

(11) Veröffentlichungsnummer: **0 015 406**
**A1**

(12) # EUROPÄISCHE PATENTANMELDUNG

(21) Anmeldenummer: 80100674.3

(51) Int. Cl.³: **B 01 D 39/08**

(22) Anmeldetag: 11.02.80

(30) Priorität: **13.02.79 DE 2905423**

(43) Veröffentlichungstag der Anmeldung: **17.09.80**
**Patentblatt 80/19**

(84) Benannte Vertragsstaaten: **AT CH FR GB IT SE**

(71) Anmelder: **Passavant-Werke Michelbacher Hütte,
D-6209 Aarbergen 7 (DE)**

(72) Erfinder: **Seel, Karl, Aarstrasse 11,
D-6209 Aarbergen 3 (DE)**

(74) Vertreter: **Glawe, Richard, Dr. Ing. et al,
Liebherrstrasse 20, D-8000 München 26 (DE)**

(54) **Filtergewebe.**

(57)  Ein Filtergewebe für Mikrofilteration mit glatter Anströmseite und feinporiger Rückseite besteht aus zwei sich rechtwinklig kreuzenden, mit langflottierender Gewebebindung verwebten Fadensystemen, von denen das eine Fadensystem
überwiegend an der Anströmseite liegt und aus monofilen
Chemiedrähten mit einem Durchmesser von 30 bis 100 µm besteht, die zwischen sich siebspaltartige Filteröffnungen von 0,3
bis 20 µm Breite bilden, und das andere Fadensystem aus feinporigem voluminösem Garn überwiegend an der Rückseite
liegt und dort eine geschlossene Filterfläche bildet.

EP 0 015 406 A1

- 1 -

Passavant-Werke
Michelbacher Hütte
6209 Aarbergen 7
-------------------

Filtergewebe
------------

Die Erfindung betrifft ein Filtergewebe gemäß dem Oberbegriff des Anspruchs 1.

Ein derartiges Filtergewebe ist aus der DE-AS 1 536 785 bekannt. Hierbei bestehen beide Fadensysteme aus multifilen Chemieseiden, wobei sich das die Anströmseite bildende Fadensystem von dem anderen Fadensystem nur dadurch unterscheidet, daß es niedrig gedreht ist und vorzugsweise profilierte Fäden aufweist. Das bekannte Gewebe ist für eine stufenweise Filtration durch teilweises Eindringen der zu filtrierenden Partikel bestimmt. Das bekannte Filtergewebe ist ein relativ grobes Gewebe, das nicht für Mikrofiltration im Porenbereich von ca. 10 µm vorgesehen ist. Außerdem ist wegen der Verwendung von multifilen Garnen die Gewebevorderseite zwar glatter

0015406

als die Rückseite, aber immer noch stark strukturiert, so daß sie die anhaftenden Feststoffpartikel immer noch relativ stark festhält und daher keine optimale Abreinigung gestattet.

Speziell zur Mikrofiltration ist aus DE-OS 2 456 409 ein Filtergewebe bekannt, welches ausschließlich aus monofilen Chemiedrähten besteht und die Besonderheit aufweist, daß die Maschen in einer mindestens teilweise von der Flächenormalen abweichenden oder gekrümmten Strömungsverlauf haven. Eine Steigerung der Abscheideleistung durch noch weitergehende Verringerung der Maschenweite würde bei diesem Gewebe eine derartige Verkleinerung der Filterleistung durch Verringerung der offenen Filterfläche zur Folge haben, daß ein solches Gewebe nicht mehr wirtschaftlich einzusetzen wäre.

Der Erfindung liegt die Aufgabe zugrunde, ein Filtergewebe für die Mikrofiltration sowohl im Naßbereich, insbesondere für Wasser und Abwasser, als auch im Trockenbereich, insbesondere Feinstäube anzugeben, das die Abscheidung feinerer Partikel als bisher ermöglicht und eine gute Abreinigung des sich bildenden Filterkuchens gewährleistet.

Diese Aufgabe wird erfindungsgemäß durch die im Anspruch 1 angegebenen Merkmale gelöst.

Durch die Verwendung von monofilen Chemiedrähten an der Anströmseite und durch die gewählte Fadendichte und Gewebebindung wird erreicht, daß die Chemiedrähte zwischen sich siebspaltartige Filteröffnungen von sehr geringer Breite bilden, durch die bereits eine gute Abscheidung auch feinster Teilchen erzielt wird, wobei der von diesen gebildete Filterkuchen an der sehr glatten Anströmseite nur wenig anhaftet und daher leicht abgereinigt werden kann. Teilchen, die durch diese Filterspalte hindurchgetreten sind, werden dann in der an der Geweberückseite von dem anderen Fadensystem gebildeten lückenlösen Filterschicht abgefangen. Der Ausdruck lückenlose Filterschicht bedeutet hierbei, daß die Garne des zweiten Fadensystems aufgrund ihres voluminösen und schmiegsamen Charakters und durch das Ineinandergreifen der Garnoberflächen bei genügend hoher Fadendichte und ausreichende Flottierung der Bindung eine Schicht bilden, bei der Zwischenräume zwischen den Garnen nicht mehr feststellbar sind, sondern die Durchlässigkeit ausschließlich durch die Porosität innerhalb der Garne, d.h. zwischen den einzelnen Fasern oder Filamenten der Garne bestimmt wird.

Die Verwendung von Monofilamenten in einem Fadensystem gegenüber Multifilamenten und Fasergarn bringt den großen Vorteil, daß sich die von diesen Monofilamenten gebildeten Sieböffnungen nicht verändern, Dagegen flachen sich Multifilamente und Fasergarne bei längerem Gebrauch besonders unter dem Druck des Filtergutes ab und verändern hierdurch in unkontrollierbarer Weise den Filtereffekt.

Die Fadendichte der monofilen Chemiedrähte sollte in Anpassung an die jeweilige Fadenstärke und an die gewünschten Filterspaltbreiten zwischen 50 und 300 Fäden je Zentimeter liegen. Es ergibt sich dann, wie erwähnt, eine sehr glatte, leicht abzureinigende anströmseitige Gewebeoberfläche in Verbindung mit einer gleichmäßigen Filterleistung und einerlangen Standzeit.

Das die Rückseite bildende Fadensystem besteht vorzugsweise, wie an sich bekannt, aus texturiertem, multifilem Garn oder aus feinporigem Fasergarn.

Die Wirksamkeit des erfindungsgemäßen Filtergewebes läßt sich durch verschiedene Nachbehandlungen noch erhöhen. Durch Kalandern der Anströmseite wird die Oberfläche weiter geglättet und verdichtet, so daß der Abwurfeffekt des Filterkuchens erhöht wird. Durch Aufrauhen der Anströmseite entsteht eine Vergleichsmäßigung und Verdichtung der Faserflur und hierdurch eine Erhöhung der Filterwirkung.

Die Haltbarkeit und Standfestigkeit kann durch eine Nachbehandlung mit Kunstharzen, Silikonemulsionen od. dgl. bei einer Temperatur, die der Erweichungstemperatur der Garne nahekommt, erhöht werden.

Ausführungsbeispiele der Erfindung werden anhand der Zeichnungen näher erläutert.

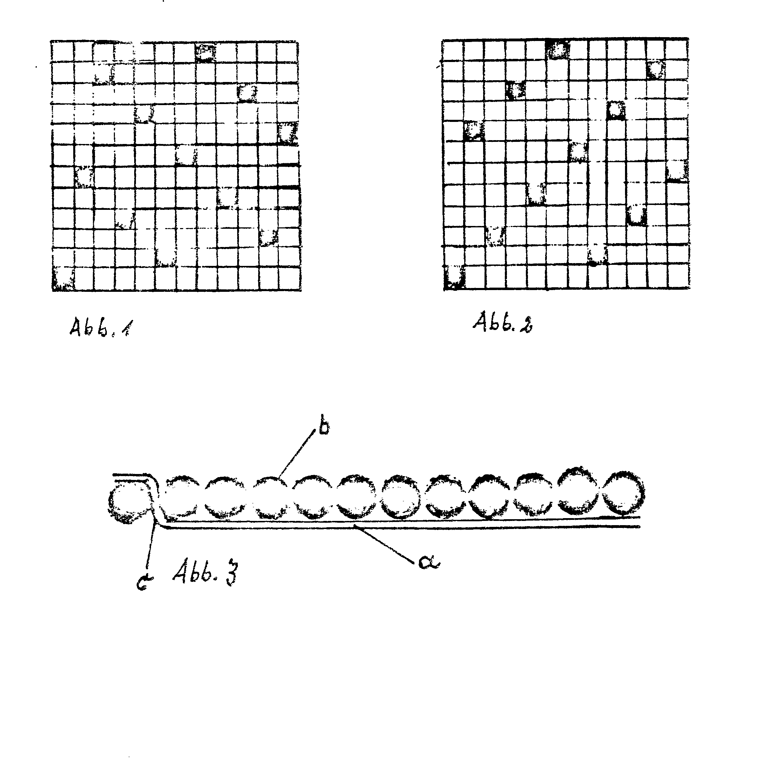

Abb. 1 und 2 sind bindungstechnische Darstellungen von für das erfindungsgemäße Filtergewebe vorzugsweise verwendeten Bindungen, nämlich 12-bindiger Atlas mit verschiedenen Steigungsgraden.

Abb. 3 zeigt einen Schnitt durch das erfindungsgemäße Filtergewebe. Hierbei bedeutet a einen der die Abströmseite bildenden monofilen Chemiedrähte, b das die Abströmseite bildende multifile, feinporige Garn und c einen Bindungspunkt der 12-bindigen Atlasbindung.

Im folgenden werden einige zahlenmäßige Beispiele für Filtergewebe mit dem vorstehend skizzierten schematischen Aufbau angegeben.

Beispiel 1

1. Fadensystem 230 Faden/cm Monofil 40 µm (17dtex)
2. Fadensystem 40 Faden/cm texturiert 167 dtex

0015406

Beispiel    2

1. Fadensystem   120 Faden/cm Monofil 70 µm (56 dtex)

2. Fadensystem    25 Faden/cm texturiert 167 dtex x 2dtex

Beispiel    3

1. Fadensystem   85 Faden/cm Monofil 100 µm

2. Fadensystem   16 Faden/cm Fasergarn NM 11/2 (890 dtex).

Man erkennt somit, daß das erfindungsgemäße Filtergewebe im wesentlichen aus zwei Schichten besteht, wobei in der anströmseitigen Schicht die Filteröffnungen nicht den Charakter von Poren, sondern von geradlinigen langgestreckten Spalten von sehr geringer Breite (Größenordnung 10 µ), aber relativ großer Länge (Größenordnung 0,2 bis 1mm) haben, während in der abströmseitigen Schicht die Filteröffnungen den Charakter von feinen, durch die texturierten Garnfilamente gebildeten Poren haben.

0015406

Patentansprüche
----------------------------------

1.    Filtergewebe mit glatter Anströmseite und feinporiger Rückseite, bestehend aus zwei sich rechtwinklig kreuzenden Fadensystemen, von denen das eine relativ glatte Fäden enthält und überwiegend an der Anströmseite liegt und das andere voluminöses, feinporiges Garn enthält und überwiegend an der Rückseite liegt, dadurch  g e k e n n-z e i c h n e t , daß das eine Fadensystem aus monofilem Chemiedraht mit einem Durchmesser zwischen 30 und 100 µm gebildet ist und daß die Gewebebindung derart langflotierend und die Fadendichte der beiden Fadensysteme derart bemessen ist, daß die die Anströmseite bildenden monofilen Chemiedrähte zwischen sich siebspaltartige Filteröffnungen von 0,3 bis 20 µm Breite bilden und das feinporige voluminöse Garn an der Geweberückseite eine geschlossene Filterfläche bildet.


2.    Filtergewebe nach Anspruch 1, dadurch  g e k e n n-z e i c h n e t , daß die monofilen Chemiedrähte runden Querschnitt aufweisen.


3.    Filtergewebe nach Anspruch 1, dadurch  g e k e n n-z e i c h n e t , daß die Fadendichte der monofilen Chemiedrähte 50 bis 300 Fäden je Zentimeter beträgt.


4.    Filtergewebe nach Anspruch 1, dadurch  g e k e n n-

zeichnet , daß das voluminöse feinporige Garn aus texturiertem multifilem Garn oder aus lose gedrehtem Fasergarn besteht.

5. Filtergewebe nach einem der Ansprüche 1 bis 4, dadurch gekennzeichnet , daß die Anströmseite kalandriert ist.

6. Filtergewebe nach einem der Ansprüche 1 bis 5, dadurch gekennzeichnet, daß die Abströmseite aufgerauht ist.

7. Filtergewebe nach einem der Ansprüche 1 bis 6, dadurch gekennzeichnet, daß es mit Kunstharzen und/oder Silikonemulsionen bei einer der Erweichungstemperatur der Garne nahekommenden Temperatur nachbehandelt ist.

Abb. 1

Abb. 2

Abb. 3

# EUROPÄISCHER RECHERCHENBERICHT

0015406
Nummer der Anmeldung

EP 80 10 0674

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | DE - U - 1 669 928 (FILTER SERVICE)<br>* Ansprüche 1 und 2; Fig. 2 *<br>-- | 1,2,6 |
| | DE - U -1 752 442 (VEREINIGTE SEIDEN-<br>WEBEREIEN)<br>* Ansprüche 1 und 2 *<br>-- | 1,3,4 |
| | DE - U - 1 782 260 (J.H. VOM BAUR SOHN)<br>* Anspruch 2 *<br>-- | 1 |
| | DE - U - 1 808 727 (PASSAVANT)<br>* Anspruch *<br>-- | 7 |
| | DE - U - 1 944 824 (FORSCHUNGSINSTITUT<br>FÜR TEXTILTECHNOLOGIE)<br>* Ansprüche 1 bis 4,6, Beispiel 1 *<br>-- | 1,3,4 |
| | DE - A1 - 2 754 305 (TEIJIN)<br>* Ansprüche 1, 5, 11 *<br>-- | 1,5,6 |
| D | DE - A1 - 2 456 409 (PASSAVANT)<br>* Ansprüche 2, 4, 5 *<br>-- | 1,7 |
| A | DE - U - 1 897 028 (BAYER)<br>* vollständiges Dokument *<br>-- | |
| A | DE - U - 1 959 924 (VEREINIGTE SEIDEN-<br>WEBEREIEN)<br>* vollständiges Dokument *<br>-- ./.. | |

Der vorliegende Recherchenbericht wurde für alle Patentansprüche erstellt.

**KLASSIFIKATION DER ANMELDUNG (Int.Cl.3)**

B 01 D 39/08

**RECHERCHIERTE SACHGEBIETE (Int. Cl.3)**

B 01 D 39/08

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsatze
E: kollidierende Anmeldung
D: in der Anmeldung angeführtes Dokument
L: aus andern Gründen angeführtes Dokument
&: Mitglied der gleichen Patent-familie, übereinstimmendes Dokument

| Recherchenort | Abschlußdatum der Recherche | Prüfer |
|---|---|---|
| Berlin | 22-05-1980 | KÜHN |

EPA form 1503.1  08.78

**Europäisches Patentamt**

**EUROPÄISCHER RECHERCHENBERICHT**

0015406

Nummer der Anmeldung

EP 80 10 0674

– Seite 2 –

| | **EINSCHLÄGIGE DOKUMENTE** | | **KLASSIFIKATION DER ANMELDUNG (Int.Cl.3)** |
|---|---|---|---|
| Kategorie | Kennzeichnung des Dokuments mit Angabe, soweit erforderlich, der maßgeblichen Teile | betrifft Anspruch | |
| A | DE – U – 1 997 176 (FABRICE TEXTILGES.) <br> * vollständiges Dokument * <br> –– | | |
| A | DE – A – 2 326 501 (VEB SYNTHETISCHE TEXTILIEN) <br> * vollständiges Dokument * <br> –– | | |
| A | DE – A1 – 2 718 581 (HUYCK CORP.) <br> * vollständiges Dokument * <br> –––– | | **RECHERCHIERTE SACHGEBIETE (Int. Cl.3)** |